# EUROPÄISCHE PATENTSCHRIFT

(11) **EP 0 937 593 B1**
(45) Veröffentlichungstag und Bekanntmachung des Hinweises auf die Patenterteilung: **14.08.2002**
(21) Anmeldenummer: 98117929.4
(22) Anmeldetag: 22.09.1998
(51) Int. Cl.: B60D 1/60

(54) **Schutzkappenträgersystem**
Equipment to locate a protective cover
Dispositif pour loger un capuchon de protection

(30) Priorität: 18.02.1998 DE 29802603 U
(43) Veröffentlichungstag der Anmeldung: 25.08.1999
(73) Patentinhaber: Nauder, Kurt, 82276 Adelshofen (DE)
(72) Erfinder: Nauder, Kurt, 82276 Adelshofen (DE)
(74) Vertreter: Strobel, Wolfgang, Dipl.-Ing.

(56) Entgegenhaltungen:
- DE-U- 1 926 607
- DE-U- 8 518 027
- DE-U- 8 619 683
- DE-U- 9 002 631
- US-A- 4 955 968

## Beschreibung

Die vorliegende Erfindung betrifft ein Schutzkappenträgersystem für die Abdeckung einer Kraftfahrzeuganhängerkupplung.

Herkömmliche Anhängerkupplungen, insbesondere für Personenkraftwagen, weisen einen gebogenen Arm mit einem kugelförmigen Kopf auf, an denen die Deichsel eines Anhängers angehängt wird. Wenn die Anhängerkupplung nicht benutzt wird, wird üblicherweise eine Kappe über den Kopf der Anhängerkupplung zu deren Abdeckung und Schutz aufgebracht. Wenn die Anhängerkupplung benutzt wird, muß die Bedienungsperson die Kappe entfernen, um die Deichsel des Anhängers anzuhängen.

Dabei entsteht das Problem, daß die Schutzkappe als loses Teil verstaut werden muß. Dies geschieht herkömmlicherweise dadurch, daß die Schutzkappe in den Kofferraum des Fahrzeugs gelegt wird. Dabei muß die Bedienungsperson den Kofferraum öffnen und die lose Schutzkappe darin verstauen, wobei in der Regel keine Möglichkeit der geordneten Unterbringung im Kofferraum besteht. Da die Schutzkappe den normalen Witterungsbedingungen ausgesetzt ist, ist sie in der Regel verschmutzt, so daß das Hineinlegen in den Kofferraum diesen ebenfalls verschmutzt. Um den Kofferraum nicht zu verschmutzen, muß die Schutzkappe daher vor Einlegen gereinigt werden.

Nach Entfernen des Anhängers beziehungsweise der Deichsel muß die Schutzkappe wieder auf die Anhängerkupplung aufgebracht werden, was deren Auffinden im Kofferraum erfordert. Dies führt insgesamt zu einer sehr umständlichen Handhabung und die Gefahr des Verlustes der Schutzkappe ist groß. Beim beladenen Kofferraum besteht der Nachteil einer umständlichen Suche der Schutzkappe bzw. die Gefahr der Beschädigung der Schutzkappe durch sich herumbewegende Gegenstände, wie Koffer während der Fahrt.

Um eine Aufnahme der Schutzkappe außerhalb des Fahrzeugs vorzusehen, wurde gemäß DE-GM 92 01 445 vorgeschlagen, diese auf einem dem Anhänger kupplungskopfnachgebildeten Kopfabschnitt aufzunehmen, der ebenfalls an dem Arm der Anhängerkupplung vorgesehen ist.

Dies hat wiederum den Nachteil, daß ein zusätzliches Teil an der Anhängerkupplung angeordnet werden muß, was diese sehr aufwendig gestaltet und einen entsprechend komplizierten und unansehnlichen Aufbau der Anhängerkupplung zur Folge hat. Eine derartige Lösung ist insbesondere bei hochwertigen Personenkraftwagen nachteilig.

Ein Schutzkappenträgersystem gemäß dem Oberbegriff des Anspruchs 1 ist aus dem Dokument DE-U-90 02 631 bekannt geworden.

Der vorliegenden Erfindung liegt deshalb die Aufgabe zugrunde, ein Schutzkappenträgersystem zu schaffen, das die Nachteile des Standes der Technik überwindet und eine wirksame Aufnahme für die Schutzkappe schafft, wenn die Anhängerkupplung in Betrieb ist.

Diese Aufgabe wird durch die Merkmale des Anspruchs 1 gelöst.

Dadurch, daß in dem dem Kopfabschnitt entgegengesetzten Endabschnitt des Körpers wenigstens zwei einander gegenüberliegende Öffnungen vorgesehen sind, die zur Aufnahme einer Schlauchklemme dienen, mit der der Schutzkappenträger an der Deichsel des Anhängers befestigbar ist, wird erreicht, daß stets bei Anhängen eines Anhängers eine Möglichkeit der Aufnahme der Schutzkappe vorhanden ist und von der Bedienungsperson die Schutzkappe ohne weitere zusätzliche Maßnahmen einfach auf den Schutzkappenträger aufstecken kann. Nach Benutzung des Anhängers und Lösen der Deichsel von der Anhängerkupplung kann die Schutzkappe dann wieder auf die Anhängerkupplung aufgesteckt werden.

Damit wird eine einfache Aufnahmemöglichkeit der Schutzkappe außerhalb des Zugfahrzeugs geschaffen.

Weitere Vorteile der vorliegenden Erfindung ergeben sich aus den Unteransprüchen.

Dadurch, daß der Basisabschnitt an seinem unterem Ende einen ringförmigen äußeren Verstärkungswulst aufweist, wird eine besonders stabile Ausgestaltung des Schutzkappenträgersystems erreicht. Die in diesem Bereich benötigte Übertragung der Klemmkraft wird dadurch besonders gut erreicht und durch die hülsenförmige Ausgestaltung des Körpers wird eine besonders leichte Ausführungsform geschaffen.

Mit Vorteil ist die Stirnfläche des Basisabschnitts giebelartig ausgebildet, wobei der Giebel sich in das Innere des Basisabschnittes erstreckt. Dies dient in hervorrangender Weise für die Anbringung des Schutzkappenträgersystems auf einem Rundholm der Deichsel.

Alternativ hierzu kann die Stirnfläche des Basisabschnitts bogenförmig ausgebildet sein, wobei der Bogen sich in das Innere des Basisabschnitts erstreckt. Somit wird ebenfalls eine besonders vorteilhafte Ausgestaltung für die Anbringung auf einen runden Holm der Deichsel des Anhängers geschaffen.

Dadurch, daß die Stirnfläche eben ist, wird eine besonders vorteilhafte Ausgestaltung für die Anbringung des Schutzkappenträgerkörpers auf einem rechteckförmigen Holm einer Deichsel des Anhängers geschaffen.

In einer konstruktiv einfachen Ausgestaltung weist der Kopfabschnitt an seiner Oberseite eine Abflachung auf. Dabei wird insbesondere eine herstellungstechnisch einfache Form erreicht.

Weiterhin ergibt sich vorteilhafterweise eine einfache und wirksame Anbringung des Kappenträgerkörpers dadurch, daß die Schlauchklemme aus einer handelsüblichen Kunststoffschlauchklemme gebildet ist. Diese weist eine ausreichende Festigkeit auf, um den Kappenträger sicher an der Deichsel des Anhängers festzulegen.

Zudem gibt sich aus der Ausbildung sowohl des Schutzkappenträgers als auch der Schlauchklemme aus Kunststoff der Vorteil, das keine Korrosion zwischen der Deichsel und dem Schutzkappenträgersystem auftritt.

Weitere vorteilhafte Ausgestaltungen fallen in den Rahmen der vorliegenden Erfindung. So kann der Basisabschnitt des hülsenförmigen Körpers ein Innengewinde aufweisen, das auf einen entsprechenden Gewindebolzen aufschraubbar ist, der an der Deichsel des Anhängers angebracht ist.

Alternativ hierzu kann auch ein Haltezapfen vorgesehen sein, auf den der hülsenförmige Körper aufsteckbar ist, wobei der Haltezapfen eine Durchtrittsöffnung für den Hindurchtritt der Schlauchklemme aufweist. Der Haltezapfen ist dabei ortsfest an der Deichsel des Anhängers angeordnet, so daß eine Lagesicherung des Kappenträgers geschaffen wird.

In einer weiteren Ausführungsform des erfindungsgemäßen Schutzkappenträgersystems weist der Schutzkappenträger eine Klemmeinrichtung auf, mit der er auf den Rand einer Platte oder Wand beispielsweise eines U-förmigen Holms aufsteckbar ist.

Weitere Einzelheiten, Merkmale und Vorteile ergeben sich aus der nachfolgenden Beschreibung unter Bezugnahme auf die Zeichnung. Darin zeigt:
- Figur 1:: eine Ansicht gemäß der Linie I-I 5 Figur 2 einer ersten bevorzugten Ausführungsform des Schutzkappenträgers;
- Figur 2:: eine Schnittansicht einer ersten bevorzugten Ausführungsform des Schutzkappenträgers.
- Figur 3:: eine Ansicht gemäß Linie III-III 5 Figur 4, die eine zweite Ausführungsform der vorliegenden Erfindung darstellt;
- Figur 4:: eine Schnittansicht durch eine zweite bevorzugte Ausführungsform des erfindungsgemäßen Schutzkappenträgers;
- Figur 5:: eine Schnittansicht gemäß der Linie V-V von Figur 6;
- Figur 6:: eine dritte bevorzugte Ausführungsform des erfindungsgemäßen Schutzkappenträgers zeigt;
- Figur 7:: eine schematische Schnittansicht einer möglichen Anbringung des erfindungsgemäßen Schutzkappenträgers gemäß Figur 4 an einem rechteckigen Holm einer Deichsel;
- Figur 8:: eine Anbringung des erfindungsgemäßen Schutzkappenträgers von Figur 2 auf dem runden Holm einer Deichsel; und
- Figur 9:: eine Schnittansicht einer weiteren Ausführungsform des erfindungsgemäßen Schutzkappenträgerssystems und einer Anbringung des Schutzkappenträgers an einem U-förmigen Holm einer Deichsel.

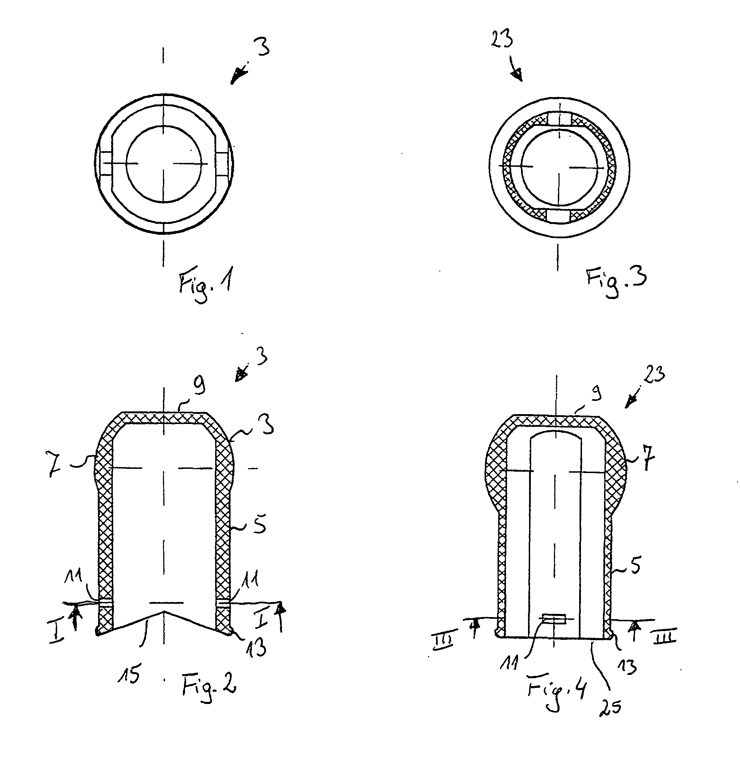

In Figur 1 ist eine Schnittansicht eines erfindungsgemäßen Schutzkappenträgersystems mit einem Schutzkappenträger 3 dargestellt. Diese Ansicht ergibt sich gemäß der Linie I-I von Figur 2. Wie aus Figur 2 ersichtlich weist der Schutzkappenträger 3 einen Basisabschnitt 5 und einen Kopfabschnitt 7 auf. Der Schutzkappenträger 3 ist hülsenförmig ausgebildet, wobei der Kopfabschnitt durch eine Wandverstärkung des Basisabschnitts 5 gebildet wird, und der Kopfabschnitt 7 an seiner Oberseite durch eine Abflachung 9 begrenzt ist.

In seinem unteren Bereich des Basisabschnitts 5 weist der Schutzkappenträger 3 zwei rechteckförmige Durchtrittsöffnungen 11 auf, die dazu dienen, eine handelsübliche Schlauchklemme aufzunehmen.

Am unteren Ende des Basisabschnitts 5 ist ein ringförmiger Wulst 13 vorgesehen, der eine Wandverstärkung darstellt.

Der untere Bereich des Basisabschnitts 5 ist giebelartig ausgebildet, wobei sich der Giebel 15 in das Innere des Schutzkappenträgers 3 erstreckt.

In den Figuren 3 und 4 ist eine alternative Ausführungsform des erfindungsgemäßen Schutzkappenträgers dargestellt. Diese alternative Ausführungsform eines Schutzkappenträgers 23 weist, ähnlich wie die Ausführungsform gemäß Figuren 1 und 2 ein Basisabschnitt 5, ein Kopfabschnitt 7, eine Abflachung 9, sowie zwei Durchtrittsöffnungen 11 und einen Verstärkungswulst 13 auf. Die Stirnfläche 25 des unteren Endbereichs des Basisabschnitts 5 ist eben ausgebildet.

Figur 3 zeigt einen Schnitt gemäß der Linie III-III von Figur 4.

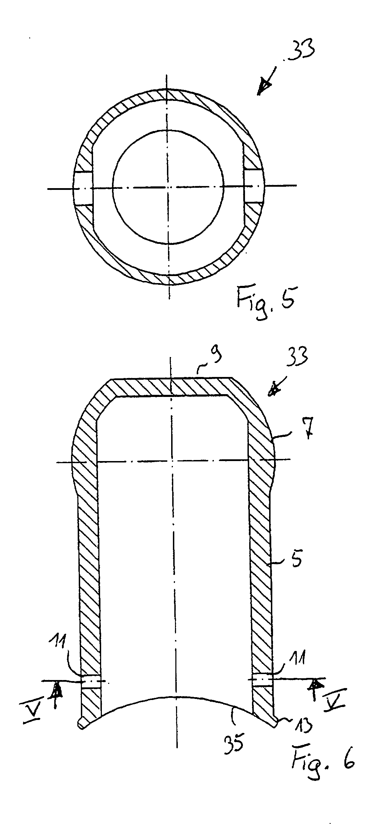

In den Figuren 5 und 6 ist eine weitere alternative Ausführungsform der vorliegenden Erfindung dargestellt. Wiederum sind gleiche Elemente aller Ausführungsformen mit gleichen Bezugsziffern bezeichnet.

Im Unterschied zu den bisherigen Ausführungsformen weist der Schutzkappenträger 33 gemäß Figuren 5 und 6 eine gebogene Stirnfläche 35 auf. Diese dient ebenfalls zur Anbringung des Schutzkappenträgers auf einem runden Holm einer Deichsel einer Anhängerkupplung.

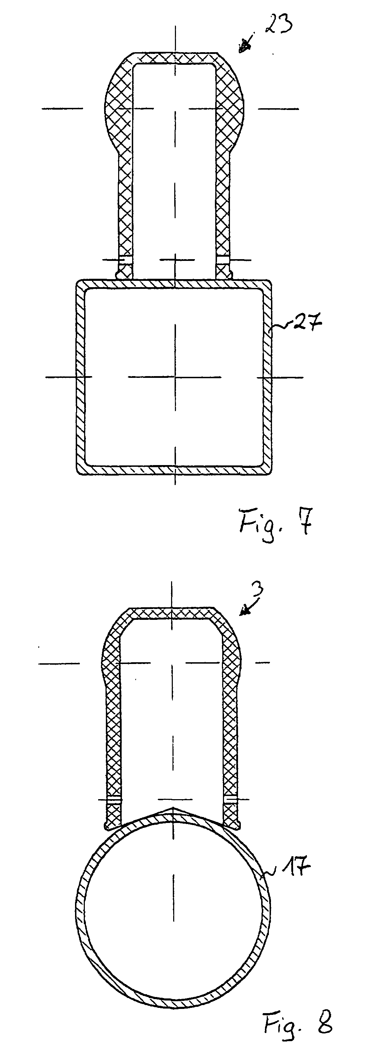

In Figur 7 ist eine Anbringung des erfindungsgemäßen Schutzkappenträgersystems auf einem rechteckigen Holm 27 dargestellt. Es handelt sich dabei um die Ausführungsform gemäß Figuren 3 und 4.

In Figur 8 ist eine Anbringung des erfindungsgemäßen Schutzkappenträgers 3 auf einem runden Holm 17 einer Anhängerdeichsel dargestellt.

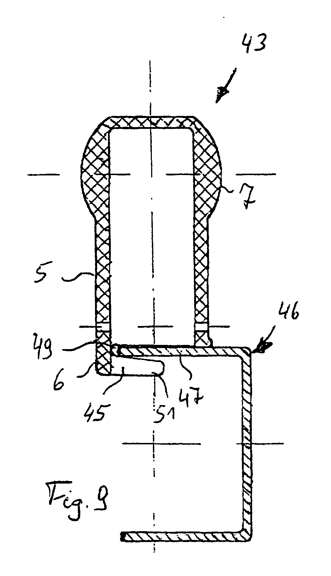

In Figur 9 ist eine weitere Alternative des erfindungsgemäßen Schutzkappenträgersystems dargestellt. Der Schutzkappenträger 43 weist eine Klemmeinrichtung 45 auf, mit der er auf den Rand einer Platte oder Wand 47 einer U-förmigen Deichsel 46 aufsteckbar ist. Dabei wird ein im wesentlichen halbkreisförmiger Rand 6 des Basisabschnitts 5 mit einem Einschnitt 49 versehen, so daß zwei bogenförmige Zungen 51 ausgebildet werden. Dabei verjüngt sich der Einschnitt 49 von außen nach innen durch eine Abschrägung der Zunge 51, wodurch eine Anpassung der Klemmeinrichtung 45 an die Wandstärke der Wand 47 ohne zusätzlich Hilfsmittel und Bearbeitungen ermöglicht wird.

Mit der vorliegenden Erfindung wird somit eine einfache kostengünstig herstellbare und in ihrer Ausführung leichte und dennoch robuste Ausführung eines Schutzkappenträgerssystems geschaffen, das einfachst auf einer Deichsel eines Anhängers anbringbar ist. Je nach Art und Weise der Ausgestaltung der Deichsel werden unterschiedliche Ausführungsformen verwendet.

## Patentansprüche

1. Schutzkappenträgersystem für eine Abdeckung einer Kraftfahrzeuganhängerkupplung, mit einem Schutzkappenträger (3; 23; 33; 43), die einen pilzförmigen Außenumfang aufweist, wobei der Schutzkappenträger (3; 23; 33; 43) hülsenförmig bzw. kappenförmig ausgebildet ist, wobei er einen Kopfabschnitt (7) und einen zylinderförmigen Basisabschnitt (5) aufweist, **dadurch gekennzeichnet, daß** in dem dem Kopfabschnitt (7) entgegengesetzten Endabschnitt des Körpers wenigstens zwei einander gegenüberliegende Öffnungen (11) vorgesehen sind, die zur Aufnahme einer Schlauchklemme dienen, mit der der Schutzkappenträger (3; 23; 33; 43) an der Deichsel des Anhängers befestigbar ist.

2. Schutzkappenträgersystem nach Anspruch 1, **dadurch gekennzeichnet, daß** der Basisabschnitt (5) an seinem unteren Ende einen ringförmigen äußeren Verstärkungswulst (13) aufweist.

3. Schutzkappenträgersystem nach Anspruch 1 oder 2, **dadurch gekennzeichnet, daß** die Stirnfläche (15) des Basisabschnitts (5) giebelartig ausgebildet ist, wobei der Giebel sich in das Innere des Basisabschnitts (5) erstreckt.

4. Schutzkappenträgersystem nach Anspruch 1 oder 2, **dadurch gekennzeichnet, daß** die Stirnfläche (35) des Basisabschnitts (5) bogenförmig ausgebildet ist, wobei der Bogen sich in das Innere des Basisabschnitts (5) erstreckt.

5. Schutzkappenträgersystem nach Anspruch 1 oder 2, **dadurch gekennzeichnet, daß** die Stirnfläche (25) des Basisabschnitts (5) im wesentlichen eben ist.

6. Schutzkappenträgersystem nach einem der Ansprüche 1 bis 5, **dadurch gekennzeichnet, daß** der Kopfabschnitt (7) an der Oberseite abgeflacht (9) ist.

7. Schutzkappenträgersystem nach einem der Ansprüche 1 bis 6, **dadurch gekennzeichnet, daß** die Schlauchklemme aus einer handelsüblichen Schlauchklemme, insbesondere aus Kunststoff, gebildet ist.

8. Schutzkappenträgersystem nach einem der Ansprüche 1 bis 6, **dadurch gekennzeichnet, daß** der Basisabschnitt (5) des hülsenförmigen Körpers ein Innengewinde aufweist, welches auf einem entsprechenden Gewindebolzen aufschraubbar ist.

9. Schutzkappenträgersystem nach einem der Ansprüche 1 bis 7, **dadurch gekennzeichnet, daß** der Schutzkappemträger (3; 23; 33) auf einen Haltezapfen aufsteckbar ist, der eine Durchtrittsöffnung für den Hindurchtritt der Schlauchklemme aufweist.

10. Schutzkappenträgersystem nach einem der Ansprüche 1, 2, 6 oder 7, **dadurch gekennzeichnet, daß** der Schutzkappenträger (43) eine Klemmeinrichtung (45) aufweist mit der er auf den Rand einer Platte oder Wand (47) aufsteckbar ist.

## Claims

1. A protective cap carrier system for a covering of a trailer coupling of a motor vehicle, comprising a protective cover carrier (3; 23; 33; 43), which has a mushroom-like outer circumference, wherein the protective cap carrier (3; 23; 33; 43) is formed in a sleeve-like or cap-like manner, wherein it has a head section (7) and a cylindrical base section (5), **characterized in that** at least two opposing openings (11) are provided in the end section of the body opposite to the head section (7), said openings serving for receiving a hose clamp by means of which the protective cap carrier (3; 23; 33; 43) can be attached to the shaft of the trailer.

2. A protective cap carrier system as claimed in claim 1, **characterized in that** the base section (5) has an annular outer enforcement bead (13) on its lower end.

3. A protective cap carrier system as claimed in claim 1 or 2, **characterized in that** the front end surface (15) of the base section (5) is shaped in a gable-like manner, wherein the gable extends into the interior of the base section (5).

4. A protective cap carrier system as claimed in claim 1 or 2, **characterized in that** the front end surface (35) of the base section (5) is formed arcuately, wherein the arc extends into the interior of the base section (5).

5. A protective cap carrier system as claimed in claim 1 or 2, **characterized in that** the front end surface (25) of the base section (5) is substantially planar.

6. A protective cap carrier system as claimed in one of claims 1 to 5, **characterized in that** the head section (7) is flattened on the upper side (9).

7. A protective cap carrier system as claimed in one of claims 1 to 6, **characterized in that** the hose clamp is formed of a conventional hose clamp, in particular made from plastics.

8. A protective cap carrier system as claimed in one of claims 1 to 6, **characterized in that** the base section (5) of the sleeve-like body comprises an internal thread, which can be screwed onto a corresponding threaded bolt.

9. A protective cap carrier system as claimed in one of claims 1 to 7, **characterized in that** the protective cap carrier (3; 23; 33) can be plugged onto a holding pin which has a passage opening for passing the hose clamp.

10. A protective cap carrier system as claimed in one of claims 1, 2, 6 or 7, **characterized in that** the protective cap carrier (43) has a clamping means (45) by means of which it can be plugged onto the edge of a plate or wall (47).

## Revendications

1. Système de support de capuchon de protection pour une couverture d'une attache de remorque de véhicule automobile, comportant un support de capuchon de protection (3 ; 23 ; 33 ; 43), qui présente un pourtour extérieur en forme de champignon, dans lequel le support de capuchon de protection (3 ; 23 ; 33 ; 43) est réalisée en forme de gaine ou en forme de capuchon et présente une section de tête (7) et une section de base (5) cylindrique, **caractérisé en ce que** dans la section d'extrémité du corps opposée à la section de tête (7) sont prévus en regard l'un de l'autre au moins deux orifices (11), qui servent à loger une pince pour tuyau par laquelle le support de capuchon de protection (3 ; 23 ; 33 ; 43) peut être fixé au timon de la remorque.

2. Système de support de capuchon de protection selon la revendication 1, **caractérisé en ce que** la section de base (5) présente à son extrémité inférieure un bourrelet de renfort extérieur (13) annulaire.

3. Système de support de capuchon de protection selon la revendication 1 ou 2, **caractérisé en ce que** la face frontale (15) de la section de base (5) est réalisée à la manière d'un pignon, le pignon s'étendant à l'intérieur de la section de base (5).

4. Système de support de capuchon de protection selon la revendication 1 ou 2, **caractérisé en ce que** la face frontale (35) de la section de base (5) est réalisée en forme d'arc, l'arc s'étendant à l'intérieur de la section de base (5).

5. Système de support de capuchon de protection selon la revendication 1 ou 2, **caractérisé en ce que** la face frontale (25) de la section de base (5) est sensiblement plane.

6. Système de support de capuchon de protection selon l'une des revendications 1 à 5, **caractérisé en ce que** la section de tête (7) est aplatie (9) sur le côté supérieur.

7. Système de support de capuchon de protection selon l'une des revendications 1 à 6, **caractérisé en ce que** la pince pour tuyau est constituée par une pince pour tuyau courante du commerce, en particulier en matière plastique.

8. Système de support de capuchon de protection selon l'une des revendications 1 à 6, **caractérisé en ce que** la section de base (5) du corps en forme de gaine présente un taraudage, lequel peut être vissé sur un boulon fileté correspondant.

9. Système de support de capuchon de protection selon l'une des revendications 1 à 7, **caractérisé en ce que** le support de capuchon de protection (3 ; 23 ; 33) peut être emboîté sur un téton de maintien, qui présente un orifice de passage pour le passage de la pince pour tuyau.

10. Système de support de capuchon de protection selon l'une des revendications 2, 6 ou 7, **caractérisé en ce que** le support de capuchon de protection (43) présente un dispositif de serrage par lequel il peut être emboîté sur le bord d'une plaque ou paroi (47).
